# EUROPEAN PATENT SPECIFICATION

(11) **EP 1 818 196 B1**
(45) Date of publication and mention of the grant of the patent: **25.03.2009**
(21) Application number: 06425080.6
(22) Date of filing: 13.02.2006
(51) Int. Cl.: B60H 1/00

(54) **Device for treating an air flow**
Luftstromsteuereinheit
Dispositif de distribution d'air.

(43) Date of publication of application: 15.08.2007
(73) Proprietor: Denso Thermal Systems Spa, 10046 Poirino, (TO) (IT)
(72) Inventor: Gataleta, Raffaele, 10046 Poirino (Torino) (IT)
(74) Representative: Marchitelli, Mauro

(56) References cited:
- EP-A- 1 070 611
- DE-A1- 10 261 037
- DE-A1- 10 322 457

## Description

The present invention relates to a device for treating an air flow to be sent into the passenger compartment of a vehicle. In particular, the focus is on means for regulating the flow of air circulating within the device. In the prior art, such devices comprise:
- a support case defining a zone for cooling the air flow, a zone for heating the air flow and a mixing chamber;
- an evaporator housed in the air flow cooling zone;
- a heating radiator housed in the air flow heating zone;
- a first opening which places the cooling zone in communication with the mixing zone;
- a second and a third opening which place the heating zone in communication with the other zones of the device.

EP-B1-1 109 689 describes a device for treating an air flow according to the prior art.

In this known solution, a mixing door is used, which can be moved between a first and a second end position and is able to regulate the path of the air flow which traverses the air treatment device.

In the first end position, the mixing door closes the second and third opening, forcing the flow exiting the evaporator to go directly into the mixing chamber whilst in the second end position the mixing door closes the first opening and at the same time it opens the second and third opening to cause the flow to move into the heating zone and subsequently to direct it into the mixing chamber, thereby creating a deviated flow. The intermediate positions assumed by the mixing door lead to the formation of two flows, which follow respectively one of the two paths determined by the end positions of the mixing door. These two flows, mixing in the mixing chamber, form an air flow characterised by an intermediate thermodynamic condition with respect to the thermodynamic conditions of the two flows.

The mixing door of the document EP 1 109 689 is constituted by two distinct rigid zones, rigidly connected to each other and able respectively to position themselves on the two openings of the heating zone. The two openings are substantially aligned along a radial direction relative to the axis of rotation of the door. This entails the construction of a return channel, parallel to the entry channel of the heating zone and such as to considerably extend the path of the deviated air flow relative to the path of the direct air flow. This makes the system less efficient because it is subject to greater pressure losses. The evident different in length between the direct path and the deviated path, moreover, entails an increase in the time needed to reach steady state conditions in the intermediate adjustments of the device, due to an advance cold flow.

Moreover, the construction of the deviated path entails a considerable bulk of the device, both due to the presence of the return channel and to the space needed to operate the mixing door.

EP-A1-1070611 discloses an air mix door with a flexible hinge portion, according to the preambule of claim 1.

The object of the present invention is to solve the problems of the known solution described previously.

According to the present invention, said object is achieved by a device having the characteristics set out in claim 1.

The present invention shall now be described in detail with reference to the accompanying drawings, provided purely by way of non limiting example, in which:
- Figure 1 shows a cross section of the device for treating an air flow according to the embodiment of the present invention, in which the mechanism for adjusting the air flow is in a first end position;
- Figure 2 is a cross section of the device of Figure 1 with the mechanism for adjusting the air flow in a second end position.

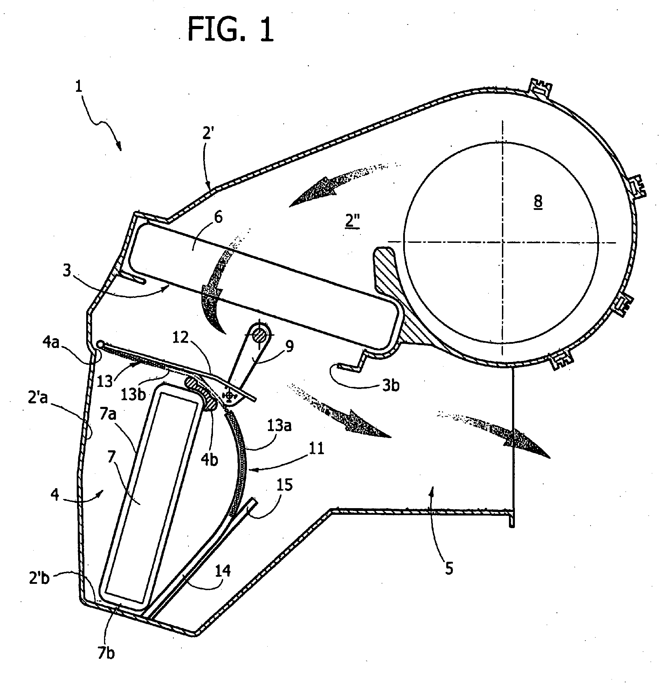

With reference to Figure 1, the number 1 designates a device for treating an air flow according to the present invention.

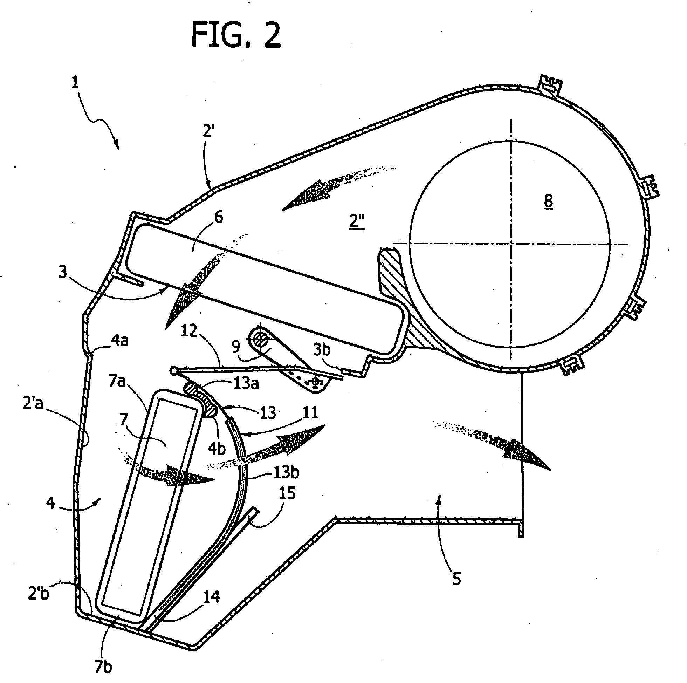

The device 1 comprises a support case 2 formed by a lateral wall 2' (shown in sectioned view in Figures 1 and 2) and by two bottom walls 2" (whereof only one is visible in the figures) contained on parallel planes to the plane of representation of Figures 1 and 2. Inside the case 2 a cooling zone 3, a heating zone 4 and a mixing chamber 5 are defined. Inside the cooling chamber 3 an evaporator 6 is housed and inside the heating chamber 4 a heating radiator 7 is housed.

A centrifugal fan 8 is positioned inside the case 2 and it is able to create a flow of air circulating inside the device 1 in the direction indicated by the arrows.

The heating radiator 7 is positioned with a main face 7a traversed by the air flow, frontally facing a portion 2'a of the lateral wall of the case 2 and with a face 7b, orthogonal to the face 7a, frontally facing the portion 2'b of the lateral wall of the case 2. The portions 2'a, 2'b of the lateral wall of the case 2 constitute for a part of their extension two walls of the heating chamber 4. An additional wall is formed by a panel 15 fastened to the portion 2'b of the lateral wall of the case and projecting towards the interior of the case.

Between the cooling chamber 3 and the mixing chamber 5 a first fluid communication opening 3b is provided.

The heating chamber 4 comprises a second and a third opening 4a, 4b, communicating respectively with the cooling chamber 4 and with the mixing chamber 5. The second and the third opening 4a, 4b are positioned on two distinct planes forming an obtuse angle between them.

The device 1 comprises a mixing door (shunt) 11 formed by a first and a second portion. The first portion is constituted by a rigid panel 12 and the second portion by a flexible sheet 13. This mixing door (shunt) 11 is actuated by a crank 9.

The crank 9 is articulated to a bottom wall 2" of the case 2 and it is actuated in rotation by actuating means (not shown) controlled by the user.

The rigid panel 12 is connected to the crank 9 and it is free to rotate relative thereto around an axis that is parallel to the axis of rotation of the crank. The flexible sheet 13 is rotatably connected to the rigid panel 12 and it has a holed region 13b and an impermeable region 13a.

Two guiding elements 14 are fastened to the portion 2'b of the lateral wall of the case 2 and form a guiding path for the lateral edges of the flexible sheet 13.

The rigid panel 12 can be moved in a first and in a second end position. In the first end position, the panel 12 closes the second opening 4a to direct the air flow exiting the cooling zone 3 directly into the mixing chamber 5 (Figure 1). In the second end position, the panel 12 closes the first opening 3b and hence forces the air flow exiting the cooling zone 3 to move towards the heating zone 4 and then into the mixing chamber 5.

In the first end position of the rigid panel 12, the flexible sheet 13 is positioned with the impermeable zone at the third opening 4b. In this position, the flexible sheet 13 completely closes the third opening and prevents fluid communication between the heating zone 4 and the mixing chamber 5. In this first end position rigid panel 12 and flexible sheet 13 lie, for a part of their extension at their mutually connected ends, substantially on the same plane. In the second end position of the rigid panel 12, the holed area 13b of the flexible sheet 13 moves to the third opening 4b. The holes of the flexible sheet 13 allow the air flow to pass from the heating chamber 4 to the mixing chamber 5 as indicated by the arrows in Figure 3. In this second end position, rigid panel 12 and flexible sheet 13 form an acute angle between them at their mutually connected ends.

As shown in Fig. 2, the deviated path inside the heating zone essentially consists of the traversing the heating radiator.

It is readily apparent that the structure is more compact and allows to obtain substantially similar direct and deviated fluid paths. This makes the regulating system more efficient, with smaller pressure losses, smaller heat losses, and it requires shorter times for reaching steady state conditions for intermediate adjustments.

Moreover, bulk is considerably reduced because the bulk of the indirect path is limited to the areas directly surrounding the radiator and the space required to operate the regulating system is substantially reduced to the space necessary for the rotation of the crank.

## Claims

1. Device for treating an air flow (1) to be sent into the passenger compartment of a vehicle,
comprising:
- a support case (2) defining a zone (3) for cooling the air flow containing an evaporator (6), a zone (4) for heating the air flow containing a heating radiator (7) and a mixing chamber (5),
- a first opening (3b) which places in direct communication the cooling zone (3) with the mixing chamber (5),
- a second (4a) and a third (4b) opening which place the heating zone (4) in communication with the other zones of the device, and
- a mixing door (11), movable between a first end position and a second end position, the first end position corresponding to a direct passage of the air from the cooling chamber (3) to the mixing chamber (5) through the first opening (3b), thereby constituting a direct flow of the air, and the second end position corresponding to a deviated passage of the air from the cooling chamber to the heating chamber through the second opening (4a) and from the heating chamber to the mixing chamber through the third opening (4b), thereby constituting a deviated flow of the air, intermediate positions between the first and the second end position enabling a mixing between said direct flow and said deviated flow,
in which said mixing door (11) has a first and a second portion (12, 13) such that in the first end position, the first portion (12) closes said second opening (4a) and the second portion (13) closes the third opening (4b) and in the second end position the first and the second portion (12,13) co-operate to close the direct passage of the air flow from the cooling zone (3) to the mixing chamber (5),
**characterised in that** said second portion (13) of the mixing door (11) is formed by a flexible sheet, connected in rotation to the first portion (12) and free to slide along guides (14) that are integral relative to the case (2).

2. Device as claimed in claim 1, **characterised in that** said flexible sheet (13) has a holed region (13b) and an impermeable region (13a).

3. Device as claimed in claim 1, **characterised in that** said first and third opening (3b,4a) are positioned on two distinct planes forming an obtuse angle between them.

4. Device as claimed in claim 2, **characterised in that** in said first end position the impermeable area (13a) of the flexible panel (13) is positioned at said third opening (4b) and prevents fluid communication between the heat zone (4) and the mixing chamber (5) and **in that** in the second end position the holed area (13b) of the flexible sheet (13) moves to said third opening (4b) allowing the passage of the air flow from the heating chamber (4) to the mixing chamber (5) through the holes of said holed region (13b).

5. Device as claimed in claim 1, **characterised in that** in said first end position said rigid panel (12) and said flexible sheet (13) lie, for a part of their extension near their mutually connected ends, substantially on the same plane and in said second end position said rigid panel (12) and said flexible sheet (13) form an acute angle between them, at their mutually connected ends.

## Patentansprüche

1. Vorrichtung zum Behandeln eines Luftstroms (1), der in den Fahrgastraum eines Fahrzeugs geleitet werden soll, wobei sie umfasst:
ein Tragegehäuse (2), das eine Zone (3) zum Kühlen des Luftstroms, die einen Verdampfer (6) enthält, eine Zone (4) zum Erhitzen des Luftstroms, die einen Heizstrahler (7) enthält, und eine Mischkammer (5) aufweist,
eine erste Öffnung (3b), die die Kühlzone (3) direkt mit der Mischkammer (5) verbindet,
eine zweite (4a) und eine dritte (4b) Öffnung, die die Heizzone (4) mit den anderen Zonen der Vorrichtung verbinden, und
eine Mischklappe (11), die zwischen einer ersten Endposition und einer zweiten Endposition bewegt werden kann, wobei die erste Endposition einem direkten Durchgang der Luft aus der Kühlkammer (3) über die erste Öffnung (3b) in die Mischkammer (5) entspricht, so dass ein direkter Strom der Luft gebildet wird, und die zweite Endposition einem umgeleiteten Durchgang der Luft aus der Kühlkammer über die zweite Öffnung (4a) in die Heizkammer und aus der Heizkammer über die dritte Öffnung (4b) in die Mischkammer entspricht, so dass ein umgeleiteter Strom der Luft gebildet wird, wobei Zwischenpositionen zwischen der ersten und der zweiten Endposition ein Mischen zwischen dem direkten Strom und dem umgeleiteten Strom ermöglichen,
wobei die Mischklappe (11) einen ersten und einen zweiten Abschnitt (12, 13) aufweist und in der ersten Endposition der erste Abschnitt (12) die zweite Öffnung (4a) verschießt und der zweite Abschnitt (13) die dritte Öffnung (4b) verschließt und in der zweiten Endposition der erste und der zweite Abschnitt (12, 13) zusammenwirken, um den direkten Durchgang des Luftstroms aus der Kühlzone (3) in die Mischkammer (5) zu verschließen,
**dadurch gekennzeichnet, dass** der zweite Abschnitt (13) der Mischklappe (11) durch eine flexible Scheibe gebildet wird, die drehend mit dem ersten Abschnitt (12) verbunden ist und frei an Führungen (14) entlang gleiten kann, die relativ zu dem Gehäuse (2) integral vorhanden sind.

2. Vorrichtung nach Anspruch 1, **dadurch gekennzeichnet, dass** die flexible Scheibe (13) einen mit Löchern versehenen Bereich (13b) und einen undurchlässigen Bereich (13a) hat.

3. Vorrichtung nach Anspruch 1, **dadurch gekennzeichnet, dass** die erste und die dritte Öffnung (3b, 4a) auf zwei separaten Ebenen angeordnet sind, die einen stumpfen Winkel zueinander bilden.

4. Vorrichtung nach Anspruch 2, **dadurch gekennzeichnet, dass** in der ersten Endposition der undurchlässige Bereich (13a) der flexiblen Scheibe (13) an der dritten Öffnung (4b) positioniert ist und Fluidverbindung zwischen der Heizzone (4) und der Mischkammer (5) verhindert, und dass in der zweiten Endposition der mit Löchern versehene Bereich (13b) der flexiblen Scheibe (13) sich zu der dritten Öffnung (4b) bewegt, so dass der Durchgang des Luftstroms aus der Heizkammer (4) über die Löcher des mit Löchern versehenen Bereiches (13b) in die Mischkammer (5) möglich ist.

5. Vorrichtung nach Anspruch 1, **dadurch gekennzeichnet, dass** in der ersten Endposition die starre Platte (12) und die flexible Scheibe (13) über einen Teil ihrer Ausdehnung nahe an ihren miteinander verbundenen Enden im Wesentlichen in der gleichen Ebene liegen und in der zweiten Endposition die starre Platte (12) und die flexible Scheibe (13) an ihren miteinander verbundenen Enden einen spitzen Winkel zueinander bilden.

## Revendications

1. Dispositif de traitement d'un écoulement d'air (1) à envoyer vers le compartiment passager d'un véhicule,
comprenant :
- un boîtier de support (2) définissant une zone (3) pour refroidir l'écoulement d'air contenant un évaporateur (6), une zone (4) pour chauffer l'écoulement d'air contenant un radiateur (7) et une chambre de mélange (5),
- une première ouverture (3b) qui place en communication directe la zone de refroidissement (3) avec la chambre de mélange (5),
- une deuxième (4a) et une troisième (4b) ouvertures qui placent la zone de chauffage (4) en communication avec les autres zones du dispositif, et
- une porte de mélange (11), mobile en une première position d'extrémité et une seconde position d'extrémité, la première position d'extrémité correspondant à un passage direct de l'air de la chambre de refroidissement (3) à la chambre de mélange (5) par la première ouverture (3b), constituant ainsi un écoulement direct de l'air, et la seconde position d'extrémité correspondant à un passage dévié de l'air de la chambre de refroidissement à la chambre de chauffage par la deuxième ouverture (4a) et de la chambre de chauffage à la chambre de mélange par la troisième ouverture (4b), constituant ainsi un écoulement dévié de l'air, les positions intermédiaires entre les première et seconde positions d'extrémité permettant un mélange entre ledit écoulement direct et ledit écoulement dévié,
dans lequel ladite porte de mélange (11) comporte une première et une seconde partie (12, 13) de sorte que, dans la première position d'extrémité, la première partie (12) ferme ladite deuxième ouverture (4a) et la seconde partie (13) ferme la troisième ouverture (4b) et, dans la seconde position d'extrémité, les première et seconde parties (12, 13) coopèrent pour fermer le passage direct de l'écoulement d'air de la zone de refroidissement (3) à la chambre de mélange (5),
**caractérisé en ce que** ladite seconde partie (13) de la porte de mélange (11) est formée par une feuille flexible, reliée en rotation à la première partie (12) et libre de glisser le long de guides (14) qui sont solidaires par rapport au boîtier (2).

2. Dispositif selon la revendication 1, **caractérisé en ce que** ladite feuille flexible (13) comporte une région trouée (13b) et une région imperméable (13a).

3. Dispositif selon la revendication 1, **caractérisé en ce que** lesdites première et troisième ouvertures (3b, 4a) sont positionnées sur deux plans distincts formant un angle obtus entre elles.

4. Dispositif selon la revendication 2, **caractérisé en ce que**, dans ladite première position d'extrémité, la zone imperméable (13a) du panneau flexible (13) est positionnée au niveau de ladite troisième ouverture (4b) et empêche une communication fluide entre la zone de chauffage (4) et la chambre de mélange (5) et **en ce que**, dans la seconde position d'extrémité, la zone trouée (13b) de la feuille flexible (13) se déplace vers ladite troisième ouverture (4b) permettant le passage de l'écoulement d'air de la chambre de chauffage (4) à la chambre de mélange (5) à travers les trous de ladite région trouée (13b).

5. Dispositif selon la revendication 1, **caractérisé en ce que**, dans ladite première position d'extrémité, ledit panneau rigide (12) et ladite feuille flexible (13) se trouvent, pour une partie de leur extension à proximité de leurs extrémités mutuellement reliées, sensiblement sur le même plan et, dans ladite seconde position d'extrémité, ledit panneau rigide (12) et ladite feuille flexible (13) forment un angle aigu entre eux, au niveau de leurs extrémités mutuellement reliées.
